(19) Europäisches Patentamt

European Patent Office

Office européen des brevets

(11) **EP 1 066 470 B1**

(12) **EUROPÄISCHE PATENTSCHRIFT**

(45) Veröffentlichungstag und Bekanntmachung des Hinweises auf die Patenterteilung:
**24.03.2004  Patentblatt 2004/13**

(51) Int Cl.$^7$: **F02P 3/04**, F02P 5/15, F02P 17/12

(21) Anmeldenummer: **99953707.9**

(22) Anmeldetag: **03.09.1999**

(86) Internationale Anmeldenummer:
**PCT/DE1999/002794**

(87) Internationale Veröffentlichungsnummer:
**WO 2000/039455 (06.07.2000 Gazette 2000/27)**

(54) **ZÜNDSTEUERUNG FÜR BRENNKRAFTMASCHINE**

IGNITION CONTROL FOR INTERNAL COMBUSTION ENGINE

COMMANDE D'ALLUMAGE POUR MOTEUR A COMBUSTION INTERNE

(84) Benannte Vertragsstaaten:
**DE FR IT**

(30) Priorität: **28.12.1998  DE 19860377**

(43) Veröffentlichungstag der Anmeldung:
**10.01.2001  Patentblatt 2001/02**

(73) Patentinhaber: **ROBERT BOSCH GMBH**
**70442 Stuttgart (DE)**

(72) Erfinder:
- **OTT, Karl**
  **D-71706 Markgröningen (DE)**
- **FICHTMÜLLER, Uwe**
  **D-71706 Markgröningen (DE)**
- **HERZTLER, Siegfried**
  **D-67295 Bolanden (DE)**

(56) Entgegenhaltungen:
**EP-A- 0 302 735          US-A- 4 351 306**

- **PATENT ABSTRACTS OF JAPAN vol. 009, no. 330 (M-442), 25. Dezember 1985 (1985-12-25) & JP 60 162060 A (TOYOTA JIDOSHA KK), 23. August 1985 (1985-08-23)**
- **PATENT ABSTRACTS OF JAPAN vol. 1997, no. 05, 30. Mai 1997 (1997-05-30) & JP 09 025847 A (NIPPON SOKEN INC), 28. Januar 1997 (1997-01-28)**

## Beschreibung

STAND DER TECHNIK

Die vorliegende Erfindung betrifft eine Zündsteuerungs -Verfahren und -Vorrichtung für eine Brennkraftmaschine und ein entsprechendes Zündsteuerverfahren.

Verteilerlose Zündsysteme für Brennkraftmaschinen sind allgemein bekannt. Anstelle eines rotierenden, mechanischen Verteilers für die Zündspannung wird die Verteilung elektrisch in Verbindung mit der Steuerung des Einspritzsystems für jeden Zylinder synchron mit der Drehzahl und dem Betriebszustand der Brennkraftmaschine durchgeführt. Die Zündung der Zylinder erfolgt durch elektrische Energie, welche einer Batterie entnommen wird. Dabei erzeugt die Zündanlage periodisch eine Hochspannung in einer Zündspule, die einen Funkenüberschlag zwischen den Elektroden der Zündkerze im Verbrennungsraum bewirkt. Die in dem Funken enthaltene Energie entzündet das verdichtete Luft-Kraftstoff-Gemisch. Zum Zündzeitpunkt steigt die Spannung an den Elektroden der Zündkerze sehr schnell an, bis die Überschlagspannung bzw. Zündspannung erreicht ist. Sobald der Funke gezündet ist, sinkt die Spannung an der Zündkerze auf die Brennspannung ab, wobei gleichzeitig in der leitfähig gewordenen Funkenstrecke ein Strom fließt.

Während der Brenndauer des Zündfunkens wird das Luft-Kraftstoff-Gemisch entflammt. Sobald die Voraussetzungen für eine Entladung nicht mehr gegeben sind, erlischt der Funke, und die Spannung schwingt gedämpft aus. Die Hochspannung wird induktiv nach dem Transformatorprinzip in einer Zündspule erzeugt, die eine Primärwicklung und eine Sekundärwicklung aufweist. Mit zunehmendem Alter bzw. Verschleiß der an der Sekundärwicklung angeschlossenen Zündkerze steigt der Zündspannungsbedarf an, d.h. die in der Sekundärspule erzeugte Hochspannung muß erhöht werden.

Die Brennzeit des nach dem ersten Überschlag zwischen den Elektroden brennenden Lichtbogens bis zum Ausschwingvorgang der restlichen gespeicherten Energie bezeichnet man als Funkenbrenndauer. Sie muß so groß sein, daß das zündfähige Gemisch mit größter Wahrscheinlichkeit den Bereich der Elektroden erreicht. Mit zunehmendem Verschleiß der Zündkerze, d.h. mit zunehmendem Zündspannungsbedarf, verkürzt sich bei gleichbleibender, der Primärwicklung der Zündspule zugeführter Primärenergie die Funkenbrenndauer.

Bei Zündsteuerungen mit Sekundärkreisüberwachung wird der während der Funkenbrenndauer im Sekundärkreis der Zündspule fließende Sekundärstrom durch einen Zündstromsensor, der als induktiver oder kapazitiver Aufnehmer oder als Ohmscher Widerstand ausgebildet ist, erfaßt. Erreicht der Sekundärstrom einen vorgegeben Schwellenwert, so wird dies als eine in dem Zylinder erfolgte Zündung erkannt. Sinkt allerdings der durch den Zündstromsensor erfaßte Sekundärstrom unter diesen Schwellenwert ab, so wird dies durch eine Erfassungs-einrichtung als ein Zündaussetzer erkannt. In einer nachgeschalteten Zündstrom-Auswerteeinrichtung werden die erkannten Zündaussetzer zylinderselektiv als Fehltriggerungen in einem Aussetzzähler aufsummiert. Erreicht der Zündaussetzzähler eine vorgegebene Zählerschwelle, wird die dem Zylinder zugehörige Einspritzung abgeschaltet.

Steigt mit zunehmendem Verschleiß der Zündspannungsbedarf an und verkürzt sich somit bei gleichbleibender, der Zündspule zugeführter Primärenergie die Funkenbrenndauer, wird an dem Zündstromsensor der Schwellenwert nicht mehr erreicht, obwohl eine Zündung in dem Zylinder in Wirklichkeit erfolgt ist. Bei Zündsteuerungen mit Sekundärkreisüberwachung kommt es also zu Fehltriggerungen der Zündstromauswertung und somit zu einem Ansteigen des Zündaussetzzählers aufgrund der kurzen Funkenbrenndauer. Dieses irrtümliche Ansteigen des Zündaussetzzählers eines Zylinders führt schließlich zu einer unberechtigten Abschaltung der Einspritzung für diesen Zylinder und somit zu einem irrtümlichen Abschalten des Zylinders.

VORTEILE DER ERFINDUNG

Die erfindungsgemäße Zündsteuerung für eine Brennkraftmaschine mit den im Anspruch 1 bzw. 11 angegebenen Merkmalen hat demgegenüber den Vorteil, daß Fehltriggerungen (die insbesondere durch einen ansteigenden Zündspannungsbedarf bei Verschleiß der Zündkerzen hervorgerufen werden), die aufgrund einer kurzen Funkenbrenndauer erfolgen und als Zündaussetzer gezählt werden und somit zu einer unberechtigten Abschaltung der Zylindereinspritzung führen können, verhindert werden.

Dabei weist die Zündsteuerung eine aufladbare Zündspule auf, die bei einem Primärzündstrom zur Zündung eines zugehörigen Brennzylinders durch eine Schaltstufe schaltbar ist, wobei in einem ersten Kennfeld Schließwinkel für einen ersten Primärzündstrom der Zündspule abgespeichert sind und in einem zweiten Kennfeld Schließwinkel für einen zweiten Primärzündstrom der Zündspule abgespeichert sind.

Die Zündsteuerung enthält ferner eine Erfassungseinrichtung zur Erfassung der in den Brennzylindern auftretenden Zündaussetzer und eine Berechnungseinrichtung, die einen Ansteuerschließwinkel zur Ansteuerung der Schaltstufe in Abhängigkeit von der Anzahl der erfaßten Zündaussetzer und den in den beiden Kennfeldern abgespeicherten Schließwinkeln berechnet.

Die der vorliegenden Erfindung zugrundeliegende idee besteht darin, in Abhängigkeit von der Anzahl der an dem Zylinder erfaßten Aussetzer die der zugehörigen Spule zugeführte Primärenergie zu erhöhen, indem man aufgrund der erkannten Zündaussetzer einen Gewichtungsfaktor berechnet, mit dem die Differenz aus den abgespeicherten Schließwinkelkennfeldern gewichtet wird.

In den Unteransprüchen finden sich vorteilhafte Weiterbildungen und Verbesserungen der in Anspruch 1 angegebenen Zündsteuerung.

Gemäß einer bevorzugten Weiterbildung bewirkt der erste Zündstrom ein minimales Zündspannungsangebot der Zündspule. Dies hat den Vorteil, daß, solange die Zündkerzen noch nicht verschlissen sind, die Zündsteuerung einen minimalen Energieverbrauch hat und somit der Zündkerzenabbrand minimal ist.

Gemäß einer weiteren bevorzugten Weiterbildung bewirkt der zweite Zündstrom einen maximalen Schaltstrom in der Schaltstufe. Dies hat den Vorteil, daß die Schaltstufe bei maximalem Zündspannungsangebot nicht überlastet wird.

Gemäß einer weiteren bevorzugten Weiterbildung besteht jedes Kennfeld aus einer Vielzahl von Schließwinkeln, die in Abhängigkeit von der erfaßten Drehzahl der Brennkraftmaschine und einer an der Primärwicklung anliegenden Aufladespannung abgespeichert sind.

Gemäß einer weiteren bevorzugten Weiterbildung weist die Erfassungseinrichtung mindestens einen Zündstromsensor auf, der mit den Sekundärwicklungen der Zündspulen zur Erfassung des Sekundärzündstroms verbunden ist.

Gemäß einer weiteren bevorzugten Weiterbildung erzeugt die Erfassungseinrichtung ein Aussetzzählsignal, wenn der Sekundärzündstrom einen vorbestimmten Schwellenwert unterschreitet.

Gemäß einer weiteren bevorzugten Weiterbildung berechnet die Berechnungseinrichtung einen Gewichtungsfaktor in Abhängigkeit von dem Aussetzzählsignal.

Gemäß einer weiteren bevorzugten Weiterbildung enthält die Berechnungseinrichtung eine Subtrahiereinrichtung, welche die Schließwinkeldifferenz zwischen dem in dem ersten Kennfeld abgespeicherten Schließwinkel und dem in dem zweiten Kennfeld abgespeicherten Schließwinkel berechnet.

Gemäß einer weiteren bevorzugten Weiterbildung enthält die Berechnungseinrichtung eine Multipliziereinrichtung, die die Schließwinkeldifferenz mit dem Gewichtungsfaktor multipliziert.

Gemäß einer weiteren bevorzugten Weiterbildung enthält die Berechnungseinrichtung eine Addiereinrichtung, welche die gewichtete Schließwinkeldifferenz mit dem in dem ersten Kennfeld abgespeicherten Schließwinkel zur Berechnung eines Ansteuerschließwinkels addiert.

## ZEICHNUNGEN

Ausführungsbeispiele der Erfindung sind in den Zeichnungen dargestellt und in der nachfolgenden Beschreibung näher erläutert.

Es zeigen:

Fig. 1      ein Blockschaltbild der erfindungsgemäßen Zündsteuerung;

Fig. 2      ein Prinzipschaltbild eines Ausführungsbeispiels der Erfassungseinrichtung gemäß der Erfindung;

Fig. 3      ein Prinzipschaltbild eines Ausführungsformbeispiels der Berechnungseinrichtung gemäß der Erfindung; und

Fig. 4      ein Diagramm zur Erläuterung der Funktionsweise der erfindungsgemäßen Zündsteuerung.

## BESCHREIBUNG DER AUSFÜHRUNGSBEISPIELE

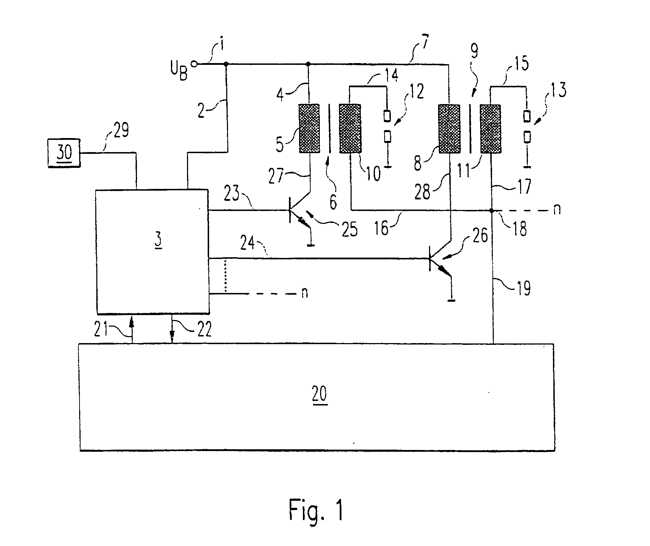

Fig. 1 zeigt ein Blockschaltbild eines Ausführungsbeispiels der erfindungsgemäßen Zündsteuerung.

Eine Spannungsversorgungsleitung 1 ist über eine Leitung 2 mit einer Berechnungseinrichtung 3 verbunden. Die Spannungsversorgungsleitung 1 ist ferner über eine Leitung 4 mit einer Primärwicklung 5 einer ersten Zündspule 6 und über eine Leitung 7 mit einer Primärwicklung 8 einer zweiten Zündspule 9 verbunden. Bei dem in Fig. 1 gezeigten Ausführungsbeispiel sind lediglich zwei Zündspulen 6, 9 gezeigt, jedoch ist die Anzahl der Zündspulen im Prinzip beliebig erhöhbar. Die beiden gezeigten Zündspulen 6, 9 weisen jeweils eine Primärwicklung 5, 8 und eine Sekundärwicklung 10, 11 auf, die induktiv miteinander gekoppelt sind. Die Sekundärwicklungen 10, 11 der Zündspulen 6, 9 sind mit Zündkerzen 12, 13 über Zündleitungen 14, 15 verbunden. Die Sekundärwicklungen 10, 11 sind ferner an ihrem anderen Anschluß über Leitungen 16, 17 sternförmig an einen Knoten 18 angeschlossen, der über eine Stromerfassungsleitung 19 mit einer Erfassungseinrichtung 20 verbunden ist. Die Erfassungseinrichtung 20 ist über eine Zählleitung 21 und eine Rücksetzleitung 22 mit der Berechnungseinrichtung 3 verbunden. Die Berechnungseinrichtung 3 steuert über Steuerleitungen 23, 24 Schaltstufen 25, 26, bei denen es sich im gezeigten Ausführungsbeispiel um Transistoren handelt. Die Schaltstufen 25, 26 sind über Leitungen 27, 29 jeweils mit den Primärwicklungen 5, 8 der Zündspulen 6, 9 verbunden. Die Berechnungseinrichtung 3 ist über eine Leitung 29 mit einem Drehzahlsensor 30 verbunden.

Die Funktionsweise der in Fig. 1 gezeigten Zündsteuerung wird im folgenden beschrieben. Die Primärwicklungen 5, 8 der Zündspulen 6, 9 sind mit der Batteriespannung $U_B$ verbunden, so daß bei einer Ansteuerung der Zündtransistoren 25, 26 über die Steuerleitungen 23, 24 in der zugehörigen Primärwicklung der Zündspulen 6, 9 ein Ladestrom fließt. Zum Auslösen der Zündung wird der entsprechende Zündtransistor 25 bzw. 26 in den gesperrten Zustand gebracht, so daß in der jeweiligen Sekundärwicklung 10, 11 der Zündspulen 6, 9 eine Hochspannung erzeugt wird, die dann an der jeweiligen Zündkerze 12, 13 einen Zündfunken hervorruft. Die Spannung an der Zündkerze 12, 13 sinkt nach Zündung des Funkens auf die Brennspannung ab. Gleichzeitig fließt in der leitfähig gewordenen Funkenstrecke ein Strom, der in der Erfassunggsleitung 19 einen Strom bewirkt. Die Erfassungseinrichtung 20 erfaßt den durch die Zündung hervorgerufenen Strom und gibt bei erkannten Zündungsaussetzern ein Zählsignal über die Leitung 21 an die Berechnungseinrichtung 3 ab.

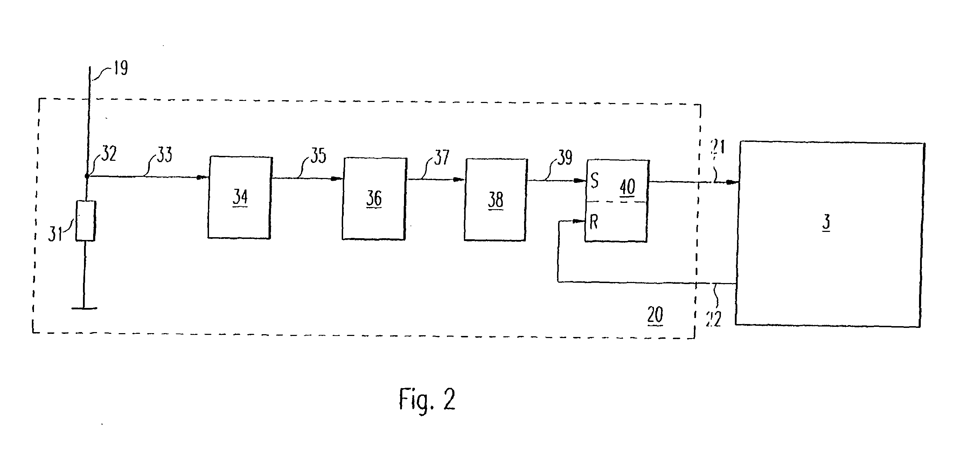

Fig. 2 zeigt ein Prinzipschaltbild eines Ausführungsbeispiels der in Fig. 1 gezeigten Erfassungseinrichtung 20. Die Erfassungseinrichtung 20 weist einen Stromsensor in Form eines Meßwiderstandes 31 auf, der an der Erfassungsleitung 19 anliegt. An einem Knoten 32 wird über eine Leitung 33 eine Meßspannung abgegriffen, die über eine Schutzschaltung 34, eine Leitung 35 über einen Bandpaß 36 und eine Leitung 37 einer Schmitt-Trigger-Schaltung 38 zugeführt wird. Die Vergleichsschaltung 38 vergleicht die an dem Meßwiderstand 31 abgegriffene Meßspannung mit einem eingebbaren, vorprogrammierten Spannungsschwellenwert und setzt über eine Leitung 39 ein Flip-Flop 40, wenn der Meßschwellenwert erreicht wird. Das Flip-Flop 40 ist über die Zählleitung 21 mit der Berechnungseinrichtung 3 verbunden.

Die Berechnungseinrichtung 3 ist über die Rücksetzleitung 22 mit dem Rücksetzanschluß des Flip-Flops 40 verbunden. Erfolgt an einem Zylinder eine Zündung, fällt an dem Meßwiderstand 31 eine ausreichende Spannung ab, welche den vorprogrammierten Schwellenwert überschreitet, und das Flip-Flop 40 wird gesetzt. Erkennt die Berechnungseinrichtung 3, daß das Flip-Flop 40 an seinem Ausgangsanschluß aufgrund der erfolgten Zündung gesetzt wird. setzt es über die Rücksetzleitung 22 dieses Flip-Flop wieder zurück. Ist der Spannungsabfall an dem Meßwiderstand 31 hingegen nicht ausreichend, so daß der Schwellenwert nicht erreicht wird, wird das Flip-Flop 40 nicht gesetzt. Erkennt die Berechnungseinrichtung 3, daß das Flip-Flop 40 der Erfassungseinrichtung 20 nicht gesetzt wird, wird ein in der Berechnungseinrichtung 3 vorgesehener interner Zähler zylinderselektiv erhöht.

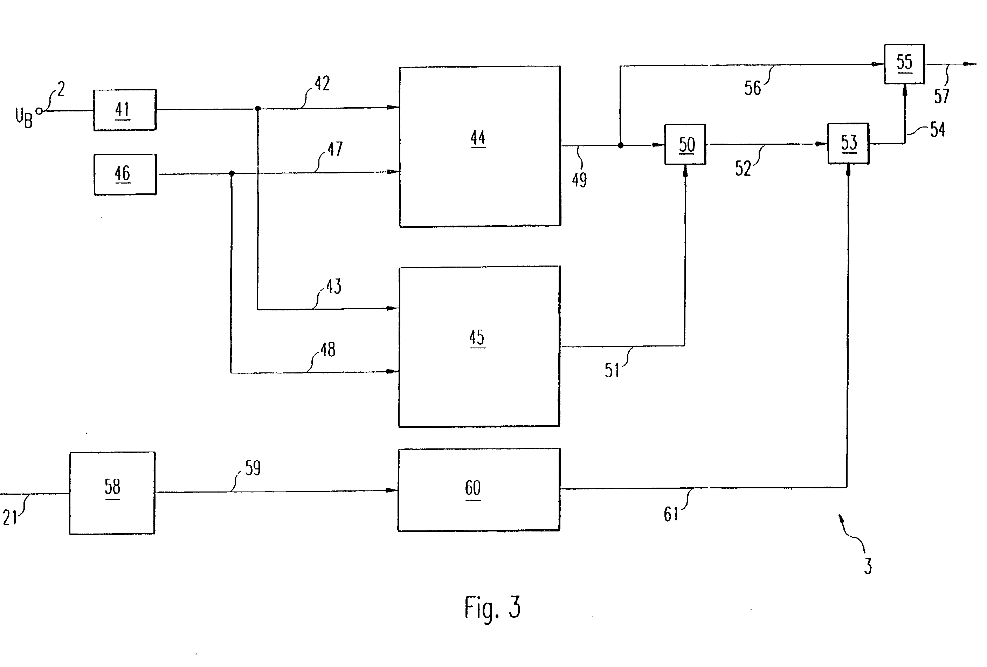

Fig. 3 zeigt ein Prinzipschaltbild eines Ausführungsbeispiels der Berechnungseinrichtung 3 gemäß der Erfindung.

Die Berechnungseinrichtung 3 ist über die Zuleitung 2 an die Batteriespannung $U_B$ angeschlossen. Die Batteriespannung wird durch eine Erfassungseinrichtung 41 erfaßt und über Zuleitungen 42, 43 einer ersten Kennfeldspeichereinrichtung 44 und einer zweiten Kennfeldspeichereinrichtung 45 zugeführt. Die Berechnungseinrichtung 3 ist ferner an einen Drehzahlsensor 46 angeschlossen, der die Drehzahl der Brennkraftmaschine erfaßt. Die erfaßte Drehzahl wird über Leitungen 47, 48 den Kennfeldspeichereinrichtungen 44, 45 zugeführt. Die erste Kennfeldspeichereinrichtung 44 ist über eine Ausgangsleitung 49 mit einer Subtrahiereinrichtung 50 verbunden. Die zweite Kennfeldspeichereinrichtung 45 ist über eine Ausgangsleitung 51 ebenfalls an die Subtrahiereinrichtung 50 angeschlossen. Die Subtrahiereinrichtung 50 ist ausgangsseitig über eine Leitung 52 mit einer Multipliziereinrichtung 53 verbunden. Diese gibt über eine Ausgangsleitung 54 ein Ausgangssignal an eine Additionseinrichtung 55 ab, welche das Ausgangssignal der Multipliziereinrichtung 53 mit dem über die Leitung 56 zugeführten Ausgangssignal der ersten Kennfeldspeichereinrichtung 44 addiert. Die Addiereinrichtung 55 gibt ein Steuersignal über eine Steuerleitung 57 an die jeweilige Schaltstufe ab.

Die Berechnungseinrichtung 3 besitzt ferner eine Aufsummationseinrichtung 58, die die Zündaussetzzähler der verschiedenen Zylinder aufsummiert und ein Zählersummensignal über eine Leitung 59 an eine Gewichtungsfaktor-Berechnungseinrichtung 60 abgibt. Die Gewichtungsfaktor-Berechnungseinrichtung 60 gibt ein Gewichtungssignal über eine Leitung 61 an die Multipliziereinrichtung 53 ab.

In den beiden Speichereinrichtungen 44, 45 sind jeweils Schließwinkelkennfelder abgespeichert. Der Schließwinkel ist dabei die Winkeldifferenz zwischen einem ersten Kurbelwinkel, bei dem die Aufladung der Primärwicklung 5 bzw. 8 der Zündspulen 6, bzw. 9 durch einen ersten Schaltvorgang der Schaltstufe 25 bzw. 25 gestartet wird, und einem zweiten Kurbelwinkel, bei dem die Zündung der Zündspule 6 bzw. 9 durch einen zweiten Schaltvorgang der Schaltstufe 25 bzw. 26 erfolgt. Bei den in den Speichereinrichtungen 44, 45 abgespeicherten Kennfeldern handelt es sich um dreidimensionale Schließwinkelfelder. Dabei ist eine Vielzahl von Schließwinkeln für verschiedene Drehzahlen und Batteriespannungen abgespeichert. Über die Erfassungseinrichtungen 41, 46 wird die Batteriespannung und die Drehzahl erfaßt und den beiden Speichereinrichtungen 44. 45 zugeführt. Für die ermittelte Spannung und Drehzahl wird jeweils der abgespeicherte Schließwinkel ausgeleser..

In dem ersten Kennfeld A, das in der ersten Kennfeldspeichereinrichtung 44 abgespeichert ist, sind die Schließwinkel für einen ersten Primärzündstrom der Zündspule abgespeichert. Dieser erste Zündstrom bewirkt ein minimales Zündspannungsangebot der Zündspule.

In dem zweiten Kennfeld B, das in der zweiten Kennfeldspeichereinrichtung 45 abgespeichert ist, sind die Schließwinkel für einen zweiten Primärzündstrom der Zündspule abgespeichert. Dieser zweite Primärzündstrom bewirkt einen maximal zulässigen Schaltstrom in der zugehörigen Schaltstufe und damit maximal mögliche Zündenergie in der Zündspule.

Die Subtrahierschaltung 50 bildet die Differenz zwischen dem von der ersten Kennfeldspeichereinrichtung 44 abgegebenen ersten Schließwinkel und dem von der zweiten Kennfeldspeichereinrichtung 45 abgegebenen zweiten Schließwinkel. Dieses Schließwinkel-Differenzsignal wird in der Multipliziereinrichtung 53 mit dem in der Gewichtungsfaktor-Berechnungseinrichtung 60 ermittelten Gewichtungsfaktor F multipliziert und dann mit dem ersten Schließwinkel in der Addiereinrichtung 55 addiert.

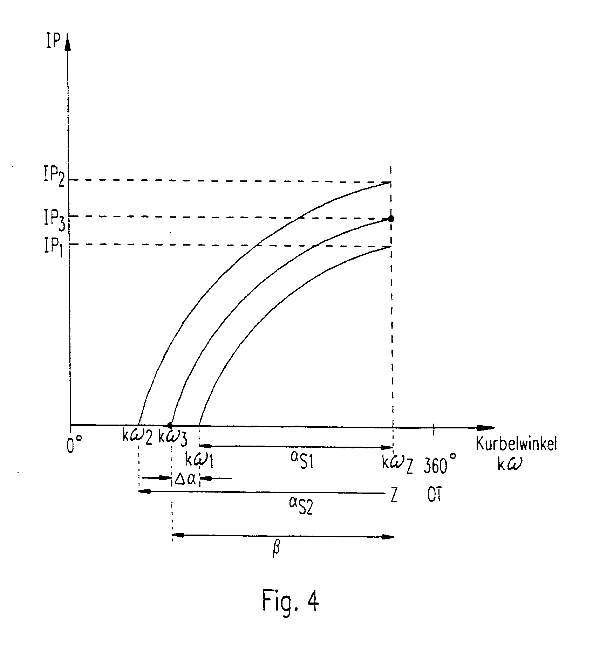

Fig. 4 dient der Erläuterung der Funktionsweise der erfindungsgemäßen Zündsteuerung. Es zeigt den Primärzündstrom, welcher durch die Primärwicklung einer Zündspule fließt in Abhängigkeit von dem Motorkurbelwinkel. Bei 0° bzw. 360° befindet sich der Brennstoffzylinder an seinem oberen Totpunkt OT. Die Zündung Z erfolgt in einem bestimmten Kurbelwinkel vor OT. In dem ersten Kennfeld A ist ein erster Schließwinkel $a_{s1}$ abgespeichert. In dem zweiten Kennfeld B ist ein zweiter Schließwinkel $a_{s2}$ abgespeichert. Beim Kurbelwinkel KW1 wird beispielsweise die Schaltstufe 25 der Zündspule 6 geschlossen, und es fließt ein Auflade-Primärstrom in die Primärwicklung 5. Nach einem Schließwinkel $a_{s1}$ erfolgt bei einem Kurbelwinkel $KW_z$ die Zündung. Der Schließwinkel a entspricht dem Produkt der Winkelgeschwindigkeit W und der Schließzeit $T_s$. Beim Kurbelwinkel $KW_z$ hat der Primärstrom durch die Zündspule einen ersten Primärstromwert IP1 erreicht. Dieser erste Zündstrom IP1 bewirkt ein minimales Zündspannungsangebot in der Zündspule. Bei einer neuen Zündkerze erfolgt die Ansteuerung zunächst nach dem in dem Kennfeld A abgespeicherten Schließwinkel $a_{s1}$. In dem Kennfeld B ist ein zweiter Schließwinkel $a_{s2}$ abgespeichert, welcher bewirkt, daß das Aufladen der Zündspule bereits bei einem Kurbelwinkel KW2 beginnt, so daß diese zum Zündzeitpunkt von einem höheren Primärzündstrom IP2 durchflossen wird. Dieser zweite Zündstrom IP2 entspricht einem maximal zulässigen Schaltstrom in der Schaltstufe und damit maximal möglicher Zündenergie in der Zündspule.

Bei neuen Zündkerzen ist der Zündspannungsbedarf noch nicht erhöht, so daß bereits bei einem Primärzündstrom IP2 zum Zündzeitpunkt eine ausreichende Funkenbrenndauer an der Zündkerze erreicht wird. Mit zunehmendem Verschleiß der Zündkerze steigt der Zündspannungsbedarf, und die Funkenbrenndauer verkürzt sich. Diese verkürzte Funkenbrenndauer führt dazu, daß die Erfassungseinrichtung 20, sobald ein Schwellenwert unterschritten wird, einen Zündaussetzer erkennt, obwohl eine Zündung erfolgt ist. Um diese Fehltriggerung zu vermeiden, wird der in dem Kennfeld A abgespeicherte erste Schließwinkel $a_{S1}$ um die gewichtete Differenz zwischen dem zweiten Schließwinkel $a_{S2}$ und dem ersten Schließwinkel $a_{S1}$ erhöht, so daß sich ein Ansteuerschließwinkel β ergibt.

Dabei gilt:

$$\beta = a_{S1} + F \times (a_{S2} - a_{S1})$$

Wie man aus Fig. 4 erkennen kann, rührt das Schließen bereits beim Kurbelwinkel KW3 dazu, daß die Spule zum Zündzeitpunkt auf einen Primärstrom IP3 aufgeladen ist. Die Zündsteuerung erhöht also bei erkannten Fehltriggerungen den Primärzündstrom in Abhängigkeit von der Anzahl der erfaßten Zündaussetzer. Ist jetzt die Energie in der Zündspule ausreichend, werden keine weiteren Fehltriggerungen erfaßt und die Zündsteuerung schaltet den Zylinder nicht ab. Liegt jedoch im umgekehrten Fall tatsächlich ein Zündaussetzer vor, so steigt der Zähler weiter an und der in der Gewichtungsfaktor-Berechnungseinrichtung 60 berechnete Gewichtungsfaktor F wird weiter erhöht, bis der Ansteuerschließwinkel β die Größe des in dem zweiten Kennfeld B abgespeicherten zweiten Schließwinkels $a_{s2}$ erreicht. Dieser führt zu einem maximal zulässigen zweiten Primärzündstrom IP2, der nicht überschritten werden darf. Steigt der Zähler trotz dieses maximalen Primärzündstroms IP2 trotzdem weiter an, erkennt die Zündsteuerung, daß wirklich Zündaussetzer an dem Zylinder vorliegen, und schaltet dessen Einspritzung ab.

Die erfindungsgemäße Zündsteuerung stellt bei einer bevorzugten Ausführungsform den Primärstrom durch die Primärwicklung der Zündspule für jeden Zylinder entsprechend der von diesem Zylinder erkannten Fehltriggerungen separat ein.

Bei einer weiteren Ausführungsform wird der Primärstrom durch alle Primärwicklungen der verschiedenen Zündspulen in Abhängigkeit der Fehltriggerungen an allen Zylindern eingestellt.

Nachdem ein Zylinder durch die Zündsteuerung 3 aufgrund der erkannten Anzahl von Zündaussetzern abgeschaltet wurde, wird dieser Zylinder bei der Ermittlung des Gewichtungsfaktors F nicht mehr berücksichtigt.

Die Berechnung des Gewichtungsfaktors F kann auf verschiedene Weise erfolgen, beispielsweise linear proportional zu der erkannten Anzahl von Aussetzern.

Durch die erfindungsgemäße Zündsteuerung können Fehltriggerungen aufgrund kurzer Funkenbrenndauer verhindert werden und ein ungerechtfertigtes Abschalten eines Zylinders vermieden werden.

Zündsteuerung für Brennkraftmaschine

BEZUGSZEICHENLISTE:

| 1 | Leitung |
|---|---|
| 2 | Leitung |
| 3 | Berechnungseinrichtung |
| 4 | Leitung |
| 5 | Primärwicklung |
| 6 | Zündspule |

(fortgesetzt)

| 7 | Leitung |
|---|---|
| 8 | Primärwicklung |
| 9 | Zündspule |
| 10 | Sekundärwicklung |
| 11 | Sekundärwicklung |
| 12 | Zündkerze |
| 13 | Zündkerze |
| 14 | Leitung |
| 15 | Leitung |
| 16 | Leitung |
| 17 | Leitung |
| 18 | Knoten |
| 19 | Leitung |
| 20 | Erfassungseinrichtung |
| 21 | Leitung |
| 22 | Leitung |
| 23 | Steuerleitung |
| 24 | Steuerleitung |
| 25 | Schaltstufe |
| 26 | Schaltstufe |
| 27 | Leitung |
| 23 | Leitung |
| 29 | Leitung |
| 30 | Drehzahlsensor |
| 31 | Meßwiderstand |
| 32 | Knoten |
| 33 | Leitung |
| 34 | Schutzschaltung |
| 35 | Leitung |
| 36 | Bandpaß |
| 37 | Leitung |
| 38 | Schmitt-Trigger |
| 39 | Leitung |
| 40 | Flip-Flop |
| 41 | Batteriespannungserfassungseinrichtung |
| 42 | Leitung |
| 43 | Leitung |
| 44 | Kennfeldspeichereinrichtung |
| 45 | Kennfeldspeichereinrichtung |

(fortgesetzt)

| 46 | Drehzahlerfassungseinrichtung |
|---|---|
| 47 | Leitung |
| 48 | Leitung |
| 49 | Leitung |
| 50 | Subtrahiereinrichtung |
| 51 | Leitung |
| 52 | Leitung |
| 53 | Multiplikationseinrichtung |
| 54 | Leitung |
| 55 | Addiereinrichtung |
| 56 | Leitung |
| 57 | Leitung |
| 58 | Aufsummiereinrichtung |
| 59 | Leitung |
| 50 | Gewichtungsfaktor-Berechnungseinrichtung |

**Patentansprüche**

1. Zündsteuerungs -Vorrichtung für eine Brennkraftmaschine mit:

   mindestens einem Brennzylinder,

   einer aufladbaren Zündspule (6, 9), die bei einem Primärzündstrom zur Zündung eines zugehörigen Brennzylinders durch eine Schaltstufe (25, 26) schaltbar ist,

   einem ersten Kennfeld, in dem Schließwinkel für einen ersten Primärzündstrom der Zündspule (6, 9) abgespeichert sind,

   einem zweiten Kennfeld, in dem Schließwinkel für einen zweiten Primärzündstrom der Zündspule (6, 9) abgespeichert sind,

   einer Erfassungseinrichtung (20) zur Erfassung der in den Brennzylindern auftretenden Zündaussetzer; und

   einer Berechnungseinrichtung (3), die derart gestaltet ist, daß sie einen Ansteuerschließwinkel zur Ansteuerung der Schaltstufe (25, 26) in Abhängigkeit von der Anzahl der erfaßten Zündaussetzer und den in den beiden Kennfeldern abgespeicherten Schließwinkeln berechnet.

**2.** Zündsteuerung nach Anspruch 1, **dadurch gekennzeichnet, daß** der erste Zündstrom ein minimales Zündspannungsangebot der Zündspule (6, 9) bewirkt.

**3.** Zündsteuerung nach Anspruch 1 oder 2, **dadurch gekennzeichnet, daß** der zweite Zündstrom einen maximalen Schaltstrom in der Schaltstufe (25, 26) bewirkt und damit maximal mögliche Zündenergie in der Zündspule.

**4.** Zündsteuerung nach einem der vorangehenden Ansprüche, **dadurch gekennzeichnet, daß** in den Kennfeldern eine Vielzahl von Schließwinkeln in Abhängigkeit von der Drehzahl der Brennkraftmaschine und einer an der Primärwicklung der Zündspule anliegenden Aufladespannung abgespeichert ist.

**5.** Zündsteuerung nach einem der vorangehenden Ansprüche, **dadurch gekennzeichnet, daß** die Erfassungseinrichtung (20) mindestens einen Zündstromsensor (31) aufweist, der mit den Sekundärwicklungen (10, 11) der Zündspulen (6, 9) zur Erfassung des Sekundärzündstromes verbunden ist.

**6.** Zündsteuerung nach einem der vorangehenden Ansprüche, **dadurch gekennzeichnet, daß** die Erfassungseinrichtung (20) ein Aussetzzählsignal erzeugt, wenn der Sekundärzündstrom einen vorbestimmten Schwellenwert unterschreitet.

**7.** Zündsteuerung nach einem der vorangehenden Ansprüche, **dadurch gekennzeichnet, daß** die Berechnungseinrichtung (3) eine Gewichtungsfaktor-Berechnungseinrichtung (60) enthält, die in Abhängigkeit von dem Aussetzzählsignal einen Gewichtungsfaktor F berechnet.

**8.** Zündsteuerung nach einem der vorangehenden Ansprüche, **dadurch gekennzeichnet, daß** die Berechnungseinrichtung eine Subtrahiereinrichtung (50) enthält, welche eine Schließwinkeldifferenz zwischen dem in dem ersten Kennfeld abgespeicherten und dem in dem zweiten Kennfeld abgespeicherten Schließwinkel berechnet.

**9.** Zündsteuerung nach einem der vorangehenden Ansprüche, **dadurch gekennzeichnet, daß** die Berechnungseinrichtung (3) eine Multipliziereinrichtung (53) enthält, welche die Schließwinkeldifferenz mit dem Gewichtungsfaktor (F) multipliziert.

**10.** Zündsteuerung nach einem der vorangehenden Ansprüche, **dadurch gekennzeichnet, daß** die Berechnungseinrichtung (3) eine Addiereinrichtung (55) enthält, welche die gewichtete Schließwinkeldifferenz mit dem in dem ersten Kennfeld abgespeicherten Schließwinkel zur Berechnung des Ansteuerschließwinkels addiert.

**11.** Zündsteuerungsverfahren für eine Brennkraftmaschine mit mindestens einem Brennzylinder, das die folgenden Schritte aufweist:

    Abspeichern eines ersten Kennfeldes, das die Schließwinkel für einen ersten Primärzündstrom einer Zündspule enthält,

    Abspeichern eines zweiten Kennfeldes, das die Schließwinkel für einen zweiten Primärstrom der Zündspule enthält,

    Erfassen der in den Brennzylindern auftretenden Zündaussetzer,

    Berechnen eines Ansteuerschließwinkels in Abhängigkeit von der Anzahl der erfaßten Zündaussetzer und den in den beiden Kennfeldern abgespeicherten Schließwinkeln,

    Ansteuern einer mit der Zündspule verbundenen Schaltstufe mit dem berechneten Ansteuerschließwinkel.

**Claims**

**1.** Ignition control device for an internal combustion engine, having:

    at least one combustion cylinder,
    a rechargeable ignition coil (6, 9) which can be switched by a switching stage (25, 26) in order to ignite an associated combustion cylinder in conjunction with a primary ignition current,
    a first characteristic map in which closing angles are stored for a first primary ignition current of the ignition coil (6, 9),
    a second characteristic map in which closing angles are stored for a second primary ignition current of the ignition coil (6, 9),
    a detecting device (20) for detecting the misfires occurring in the combustion cylinders; and
    a calculating device (3) which is fashioned in such a way that it calculates an activation closing angle for activating the switching stage (25, 26) as a function of the number of misfires detected, and of the closing angles stored in the two characteristic maps.

**2.** Ignition controller according to Claim 1, **characterized in that** the first ignition current effects a minimal supply of ignition voltage for the ignition coil (6, 9).

**3.** Ignition controller according to Claim 1 or 2, **characterized in that** the second ignition current effects a maximal switching current in the switching stage (25, 26), and therefore maximal possible ignition energy in the ignition coil.

**4.** Ignition controller according to one of the preceding claims, **characterized in that** a multiplicity of closing angles are stored in the characteristic maps as a function of the speed of the internal combustion engine, and of a recharging voltage present at the primary winding of the ignition coil.

**5.** Ignition controller according to one of the preceding claims, **characterized in that** the detecting device (20) has at least one ignition current sensor (31) which is connected to the secondary windings (10, 11) of the ignition coils (6, 9) in order to detect the secondary ignition current.

**6.** Ignition controller according to one of the preceding claims, **characterized in that** the detecting device (20) generates a misfire counting signal when the secondary ignition current drops below a predetermined threshold value.

**7.** Ignition controller according to one of the preceding claims, **characterized in that** the calculating device (3) includes a weighting factor calculating device (60) which calculates a weighting factor (F) as a function of the misfire counting signal.

**8.** Ignition controller according to one of the preceding claims, **characterized in that** the calculating device includes a subtracting device (50) which calculates a closing angle difference between the closing angle stored in the first characteristic map and the closing angle stored in the second characteristic map.

**9.** Ignition controller according to one of the preceding claims, **characterized in that** the calculating device (3) includes a multiplying device (53) which multiplies the closing angle difference by the weighting factor (F).

**10.** Ignition controller according to one of the preceding claims, **characterized in that** the calculating device (3) includes an adding device (55) which adds the weighted closing angle difference to the closing angle stored in the first characteristic map in order to calculate the activation closing angle.

**11.** Ignition control method for an internal combustion engine having at least one combustion cylinder, which has the following steps:

storing a first characteristic map which includes the closing angles for a first primary ignition current of an ignition coil,
storing a second characteristic map which includes the closing angles for a second primary ignition current of the ignition coil,
detecting the ignition misfires occurring in the combustion cylinders,
calculating the activating closing angle as a function of the number of detected ignition misfires and of the closing angles stored in the two characteristic maps,
activating a switching stage, connected to the switching coil, with the aid of the calculated activation closing angle.

**Revendications**

**1.** Commande d'allumage pour un moteur à combustion interne comprenant :

- au moins un cylindre de combustion,
- une bobine d'allumage (6, 9) pouvant être chargée qui, en présence d'un courant d'allumage primaire, peut être commutée pour l'allumage d'un cylindre de combustion correspondant, par un étage de commutation (25, 26),
- un premier champ de caractéristiques, dans lequel sont mémorisés des angles de fermeture pour un premier courant d'allumage primaire de la bobine d'allumage (6, 9),
- un deuxième champ de caractéristiques, dans lequel sont mémorisés des angles de fermeture pour un deuxième courant d'allumage primaire de la bobine d'allumage (6, 9),
- un dispositif de détection (20) destiné à détecter les ratés d'allumage qui se produisent dans les cylindres de combustion ; et
- un dispositif de calcul (3) qui est construit de manière à calculer un angle de fermeture de pilotage pour le pilotage de l'étage de commutation (25, 26) en fonction du nombre des ratés d'allumage détectés et des angles de fermeture mémorisés dans les deux champs de caractéristiques.

**2.** Commande d'allumage selon la revendication 1, **caractérisée en ce que** le premier courant d'allumage détermine une offre de tension d'allumage minimum de la bobine d'allumage (6, 9).

**3.** Commande d'allumage selon la revendication 1 ou 2, **caractérisée en ce que** le deuxième courant d'allumage détermine un courant de commutation maximum dans l'étage de commutation (25, 26) et, de cette façon, engendre l'énergie d'allumage maximum possible dans la bobine d'allumage.

4. Commande d'allumage selon une des revendications précédentes,
**caractérisée en ce que**
dans les champs de caractéristiques, sont mémorisés plusieurs angles de fermeture en fonction de la vitesse de rotation du moteur à combustion interne et d'une tension de charge appliquée à l'enroulement primaire de la bobine d'allumage.

5. Commande d'allumage selon une des revendications précédentes,
**caractérisée en ce que**
le dispositif de détection (20) présente au moins un capteur de courant d'allumage (31) qui est relié aux enroulements secondaires (10, 11) des bobines d'allumage (6, 9) pour détecter le courant d'allumage secondaire.

6. Commande d'allumage selon une des revendications précédentes,
**caractérisée en ce que**
le dispositif de détection (20) produit un signal de comptage de ratés lorsque le courant d'allumage secondaire devient inférieur à une valeur de seuil prédéterminée.

7. Commande d'allumage selon une des revendications précédentes,
**caractérisée en ce que**
le dispositif de calcul (3) comprend un dispositif de calcul (60) de facteur de pondération qui calcule un facteur de pondération F en fonction du signal de comptage de ratés.

8. Commande d'allumage selon une des revendications précédentes,
**caractérisée en ce que**
le dispositif de calcul comprend un dispositif soustracteur (50) qui calcule une différence d'angle de fermeture entre l'angle de fermeture mémorisé dans le premier champ de caractéristiques et l'angle de fermeture mémorisé dans le deuxième champ de caractéristiques.

9. Commande d'allumage selon une des revendications précédentes,
**caractérisée en ce que**
le dispositif de calcul (3) comprend un dispositif multiplicateur (53) qui multiplie la différence d'angle de fermeture par le facteur de pondération (F).

10. Commande d'allumage selon une des revendications précédentes,
**caractérisée en ce que**
le dispositif de calcul (3) comprend un dispositif additionneur (55) qui ajoute la différence d'angle de fermeture pondérée à l'angle de fermeture mémorisé dans le premier champ de caractéristiques pour calculer l'angle de fermeture de pilotage.

11. Procédé de commande d'allumage pour un moteur à combustion interne comprenant au moins un cylindre de combustion, qui comprend les étapes suivantes :

- mémorisation d'un premier champ de caractéristiques qui comprend les angles de fermeture pour un premier courant d'allumage primaire d'une bobine d'allumage,
- mémorisation d'un deuxième champ de caractéristiques qui comprend les angles de fermeture pour un deuxième courant primaire de la bobine d'allumage,
- détection des ratés d'allumage qui se produisent dans les cylindres de combustion,
- calcul d'un angle de fermeture de pilotage en fonction du nombre des ratés d'allumage détectés et des angles de fermeture mémorisés dans les deux champs de caractéristiques,
- pilotage d'un étage de commutation relié à la bobine d'allumage avec les angles de fermeture de pilotage calculés.

Fig. 1

Fig. 2

Fig. 3

EP 1 066 470 B1

Fig. 4

13